# EUROPEAN PATENT SPECIFICATION

(11) **EP 2 317 376 B1**
(45) Date of publication and mention of the grant of the patent: **01.04.2015**
(21) Application number: 10187795.9
(22) Date of filing: 15.10.2010
(51) Int. Cl.: G02F 1/139, G02F 1/1335, G02B 5/20, G02B 5/22, G02B 5/02

(54) **Optical filter for display device and display device having the same**
Optischer Filter für eine Anzeigevorrichtung und Anzeigevorrichtung damit
Filtre optique pour dispositif d'affichage et dispositif d'affichage doté de celui-ci

(30) Priority: 15.10.2009 KR 20090098035
(43) Date of publication of application: 04.05.2011
(73) Proprietor: Corning Precision Materials Co., Ltd., Asan-si, Chungcheongnam-do 336-841 (KR)
(72) Inventor: Park, Seong Sik, 336-841, ChungCheongNam-Do (KR); Park, Seung Won, 336-841, ChungCheongNam-Do (KR); Sohn, In Sung, 336-841, ChungCheongNam-Do (KR); Cho, Eun Young, 336-841, ChungCheongNam-Do (KR)
(74) Representative: Gulde & Partner

(56) References cited:
- JP-A- 2009 139 403
- US-A1- 2005 094 075
- US-A1- 2009 051 748
- US-A1- 2010 073 794

## Description

### CROSS REFERENCE TO RELATED APPLICATION

The present application claims priority from Korean Patent Application Number 10-2009-0098035 filed on October 15, 2009.

### BACKGROUND OF THE INVENTION

### Field of the Invention

The present invention relates to an optical filter for a display device and a display device having the same, and more particularly, to an optical filter for a display device having a color shift-reducing pattern and a display device having the same.

### Description of Related Art

In response to the emergence of the advanced information society, components and devices related to photoelectronics have been significantly improved and rapidly disseminated. Among them, image display devices have been widely distributed for use in TVs, Personal Computer (PC) monitors, and the like. Moreover, attempts are underway to simultaneously increase the size and reduce the thickness of such display devices.

In general, a Liquid Crystal Display (LCD) is one type of flat panel display, and displays images using liquid crystals. The LCD is widely used throughout the industry since it has the advantages of light weight, low drive voltage, and low power consumption compared to other display devices.

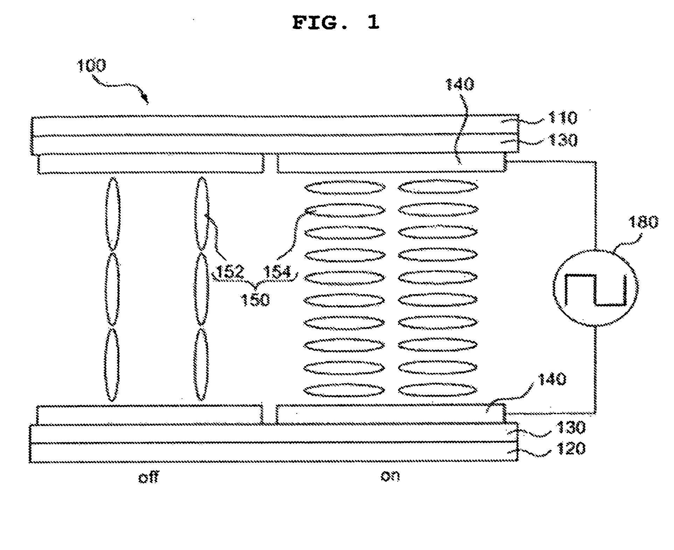

FIG. 1 is a conceptual view schematically showing the basic structure and operating principle of an LCD 100.

With reference by way of example to a conventional Vertical Alignment (VA) LCD, two polarizer films 110 and 120 are arranged such that their optical axes are oriented perpendicular to each other. Liquid crystal molecules 150 having birefringence characteristics are injected and arranged between two transparent substrates 130, which are coated with transparent electrodes 140. When an electric field is applied from a power supply unit 180, the liquid crystal molecules move and are aligned perpendicular to the electric field.

Light emitted from a backlight unit is linearly polarized after passing through the first polarizer film 120.

As shown in the left of FIG. 1, liquid crystal remains perpendicular to the substrates when no power is applied. The liquid crystal, in this state, does not change the polarization of the light. As a result, the light, which is in a linearly-polarized state, is blocked by the second polarizer film 110, the optical axis of which is perpendicular to that of the first polarizer film 120.

In the meantime, as shown in the right of FIG. 1, when power is on, the electric field causes the liquid crystal to shift to a horizontal alignment parallel to the substrates, between the two orthogonal polarizer films 110 and 120. Thus, the linearly-polarized light from the first polarizer film is converted into another kind of linearly-polarized light, the polarization of which is rotated by 90°, circularly-polarized light, or elliptically polarized light while passing through the liquid crystal molecules before it reaches the second polarizer film. The converted light is then able to pass through the second polarizer film. It is possible to gradually change the orientation of the liquid crystal from the vertical position to the horizontal position by adjusting the intensity of the electric field, thereby allowing control of the intensity of light emission.

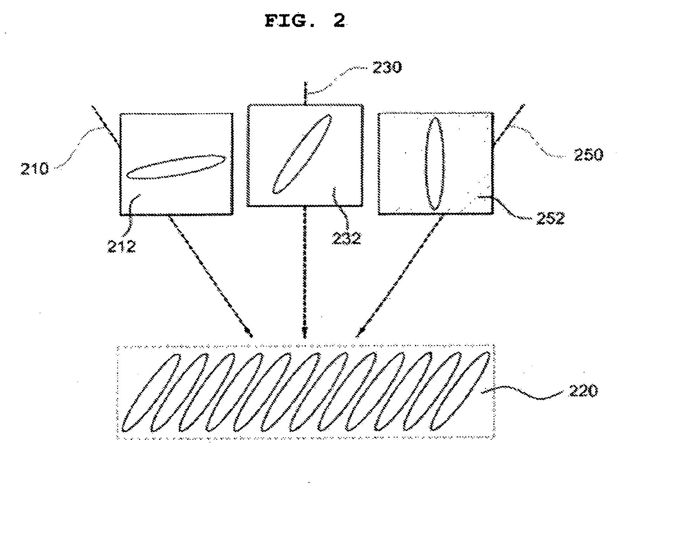

FIG. 2 is a conceptual view showing the orientation and optical transmittance of liquid crystal depending on the watching angle.

When liquid crystal molecules are aligned in a predetermined direction in a pixel 220, the orientation of the liquid crystal molecules looks different depending on the watching angle.

when viewed from the front left along the line 210, the liquid crystal molecules look as if they are substantially aligned along the horizontal orientation 212, and the image looks relatively brighter. When viewed from the front along the line 230, the liquid crystal molecules are seen to be aligned along the orientation 232, which is the same as the actual orientation of the liquid crystal molecules inside the pixel 220. In addition, when viewed from the front right along the line 250, the liquid crystal molecules look as if they are substantially aligned along the vertical orientation 252, and the image looks somewhat darker.

Accordingly, the viewing angle of the LCD is greatly limited compared to other displays that spontaneously emit light, since the intensity and color of light of the LCD varies depending on the watching angle. In order to increase the viewing angle, a large amount of research has been carried out.

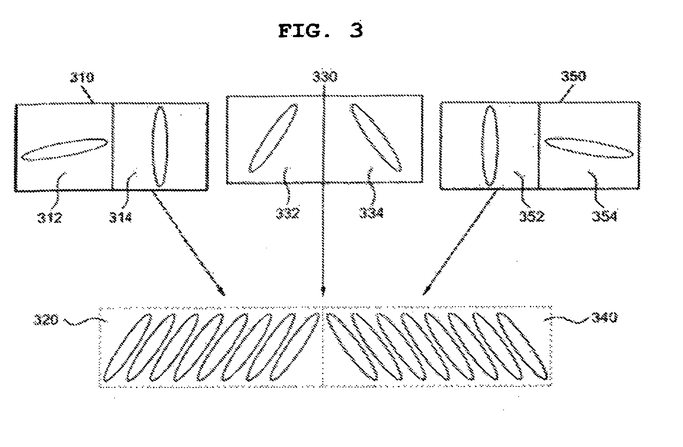

FIG. 3 is a conceptual view showing a conventional attempt to reduce variation in the contrast ratio and color shift depending on the watching angle.

Referring to FIG. 3, a pixel is divided into two pixel parts, that is, first and second pixel parts 320 and 340, in which the orientations of liquid crystal are symmetrical to each other. Both the liquid crystals oriented as shown in the first pixel part 320 and the liquid crystals oriented as shown in the second pixel part 340 can be seen. The intensity of light reaching the user is the total intensity of light of the two pixel parts.

When viewed from the front left along the line 310, liquid crystal molecules in the first pixel part 320 look as if they are aligned along the horizontal orientation 312, and liquid crystal molecules in the second pixel part 320 look as if they are aligned along the vertical orientation 314. Thus, the first pixel part 320 makes the image look bright. Likewise, when viewed from the front right along the line 350, the liquid crystal molecules in the first pixel part 320 look as if they are aligned along the vertical orientation 352, and the liquid crystal molecules in the second pixel part 340 look as if they are aligned along the horizontal orientation 354. Then, the second pixel part 340 can make the image look bright. In addition, when viewed from the front, the liquid crystal molecules are seen to be aligned along the orientations 332 and 334, which are the same as the actual orientations of the liquid crystal molecules inside the pixel parts 320 and 340. Accordingly, the brightness of the image observed by the user remains uniform and is symmetrical about the vertical center line of the screen, even when the watching angle changes. This, as a result, makes it possible to reduce variation in the contrast ratio and color shift depending on the watching angle.

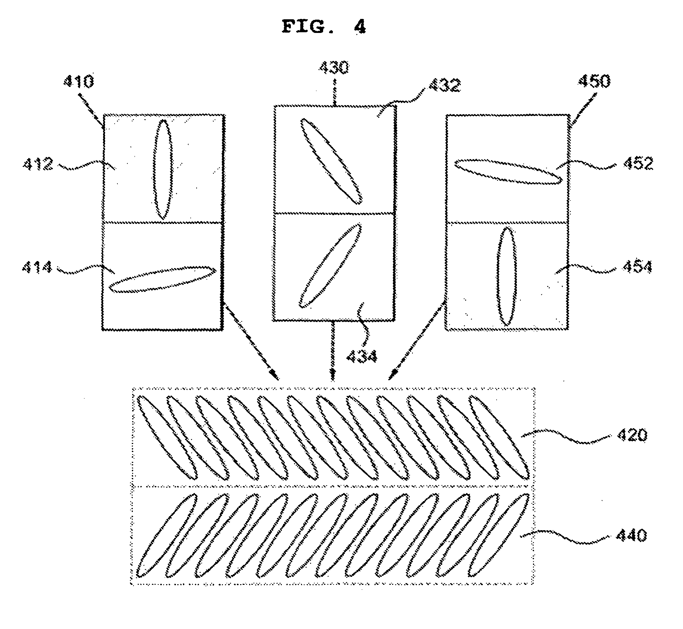

FIG. 4 is a conceptual view showing another conventional approach for reducing variation in contrast ratio and color shift depending on the watching angle.

Referring to FIG. 4, an optical film 420 having birefringence characteristics is added. The birefringence characteristics of the optical film 420 are the same as those of liquid crystal molecules inside a pixel 440 of an LCD panel, and the orientation thereof are symmetrical with the orientation of the liquid crystal molecules. Due to the orientation of the liquid crystal molecules inside the pixel 440 and the birefringence characteristics of the optical film, the intensity of light reaching the user is the total intensity of light passing through the pixel 440 and the optical film 420.

Specifically, when viewed from the front left along the line 410, the liquid crystal molecules inside the pixel 440 look as if they are aligned along the horizontal orientation 414 and imaginary liquid crystals produced by the optical film 420 look as if they are aligned along the vertical orientation 412. The resultant intensity of light is the total intensity of light passing through the pixel 440 and the optical film 420. Likewise, when viewed from the front right along the line 450, the liquid crystal molecules inside the pixel 440 look as if they are aligned along the vertical orientation 454 and the imaginary liquid crystals produced by the optical film 420 look as if they are aligned along the horizontal orientation 452. The resultant intensity of light is the total intensity of light passing through the pixel 440 and the optical film 420. In addition, when viewed from the front, the liquid crystal molecules are seen to be aligned along the orientations 434 and 432, which are the same as the actual orientation of the liquid crystal molecules inside the pixel 440 and the orientation of the optical film 420, respectively.

However, even if the approaches shown in FIGS. 3 and 4 are applied, there still exists the problem as shown in FIG. 5. That is, a color shift still occurs depending on the watching angle, and the color changes as the watching angle increases.

The information disclosed in this Background of the Invention section is only for the enhancement of understanding of the background of the invention, and should not be taken as an acknowledgment or any form of suggestion that this information forms a prior art that would already be known to a person skilled in the art.

JP 2009 139403 A discloses a plasma display panel with a color tone correction layer (18) arranged on the viewer side of the plasma display panel in order to filter out light of undesired infrared wavelengths or an undesired wavelength corresponding to a neon line contained in the imaging light emitted from the plasma display panel. In order to compensate for an excess of color correction caused by said color tone correction layer (18) under oblique viewing angles, an optical filter/sheet (11) is provided having a plurality of wedge shaped grooves (13) filled with a dispersion of absorbing coloring particles (15) dispersed in a translucent binder (14) colored with a coloring agent (46) in a color complementary to that of the color tone correction layer (18). The absorbing coloring particles (15) have an average particle diameter of 1 micron and are colored with black, or red, or blue or yellow pigments. The binder part (14) is preferably colored with an orange/red coloring agent, such as a pyrazolone orange, pyrazolone red, a benzimidazolone orange.

US 2005/094075 A1 discloses a vertically aligned LCD panel with a colour filter (202b) arranged on its viewer side, wherein the colour filter segments (404) are separated by a black matrix (402) and are further provided with scattering particles (404a) in order to reduce colour shift while looking at the display panel under varying oblique viewing angles.

US 2009/051748 A1 describes an inkjet method of forming a colour filter.

### BRIEF SUMMARY OF THE INVENTION

Various aspects of the present invention provide an optical filter for a display device that can mitigate color shift according to an increase in a watching angle and a display device having the same.

Technical features of the invention are not limited to the foregoing technical object, and other technical objects, which have not been mentioned above, will be more fully apparent to a person having ordinary skill in the art from the following description.

In an aspect of the present invention, an optical filter is provided in accordance with appended independent claim 1.

Furthermore, a display device according to claim 8 and a method of fabricating an optical filter according to claim 9 are provided.

The color shift-reducing pattern has a first and a second partial area, in which only the first partial area contains the light-absorbing material, and only the second partial area contains the light-diffusing material.

The light-absorbing material includes a green wavelength-absorbing material that absorbs light having green wavelengths from 510nm to 560nm.

The light-diffusing material includes light-diffusing beads.

As set forth above, the embodiments of the invention minimize color shift according to an increase in a watching angle, thereby ensuring that a display device has a wide viewing angle and improved image quality.

### BRIEF DESCRIPTION OF THE DRAWINGS

FIG. 1 is a conceptual view schematically showing the basic structure and operating principle of an LCD;

FIG. 2 is a conceptual view showing the orientation and optical transmittance of liquid crystals depending on the watching angle;

FIG. 3 is a conceptual view showing a conventional attempt to reduce variation in the contrast ratio and color shift depending on the watching angle;

FIG. 4 is a conceptual view showing another conventional attempt to reduce variation in the contrast ratio and color shift depending on the watching angle;

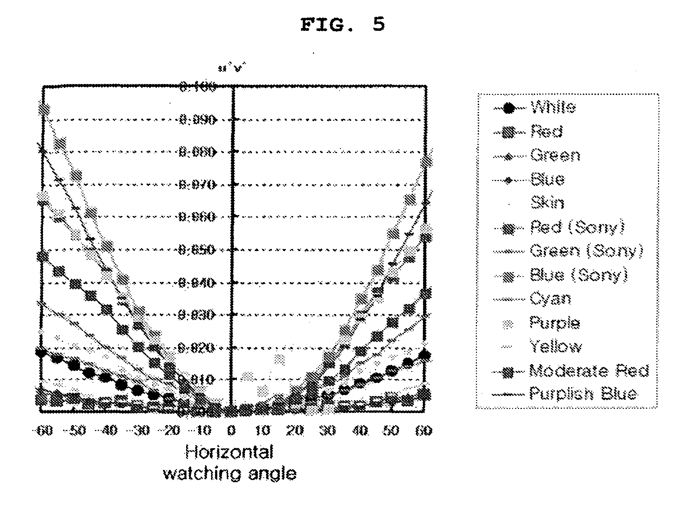

FIG. 5 is a graph showing color shifts depending on watching angles in an LCD on which an optical filter of the invention is not mounted;

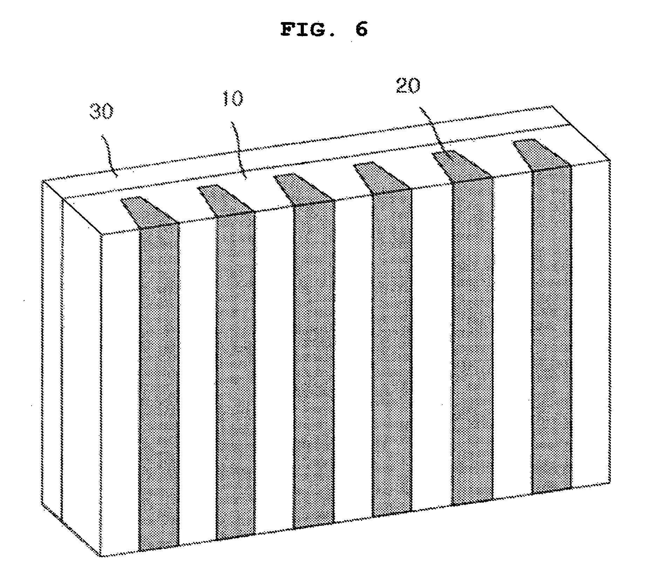

FIG. 6 is a perspective view showing an optical filter according to a comparative example not according to the invention;

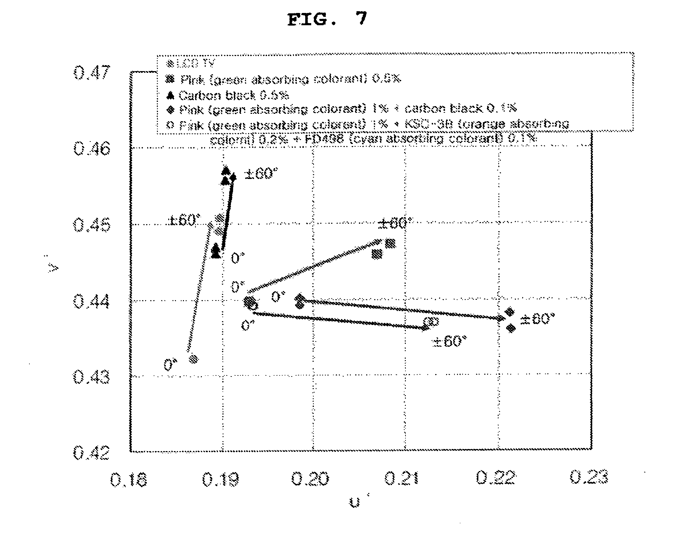

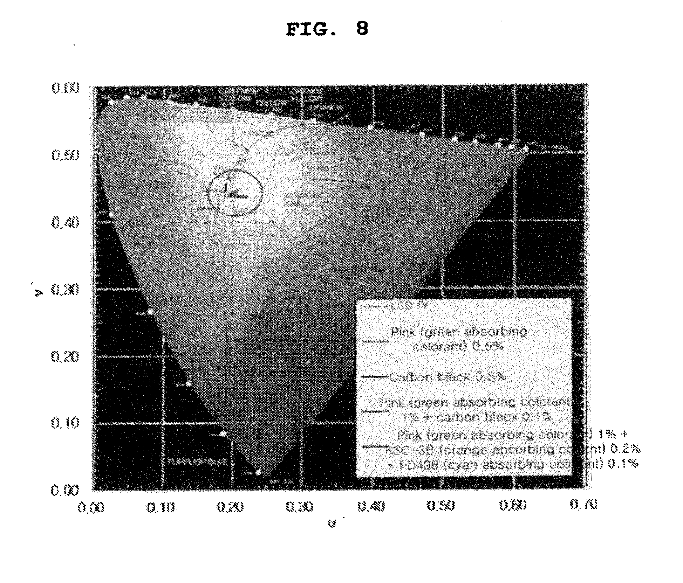

FIGS. 7 and 8 are reference views for explaining light-absorbing materials;

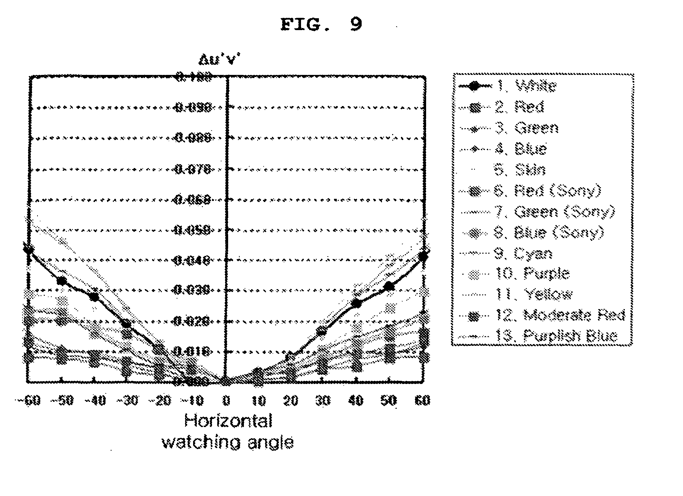

FIG. 9 is a graph showing color shifts in an LCD on which the optical filter shown in FIG. 6 is mounted;

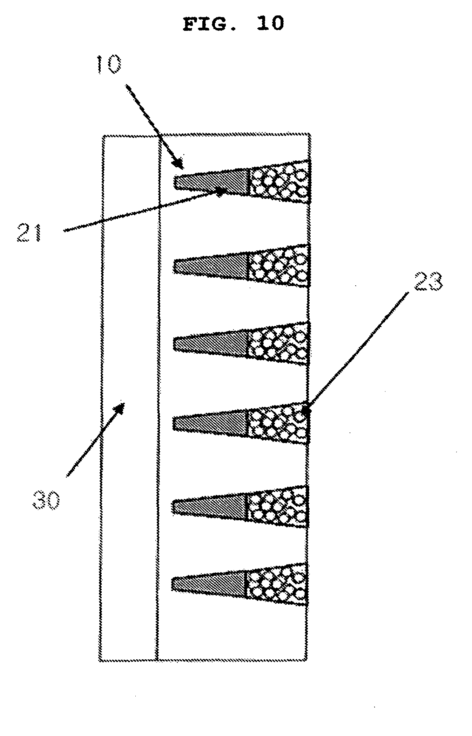

FIG. 10 is a cross-sectional view showing an optical filter according to a first exemplary embodiment of the invention;

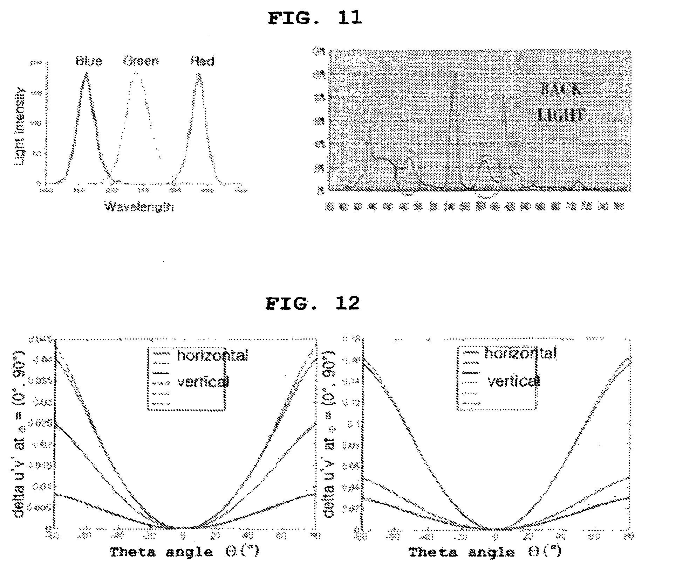

FIGS. 11 and 12 are reference views for explaining cyan wavelength-absorbing materials and orange wavelength-absorbing materials;

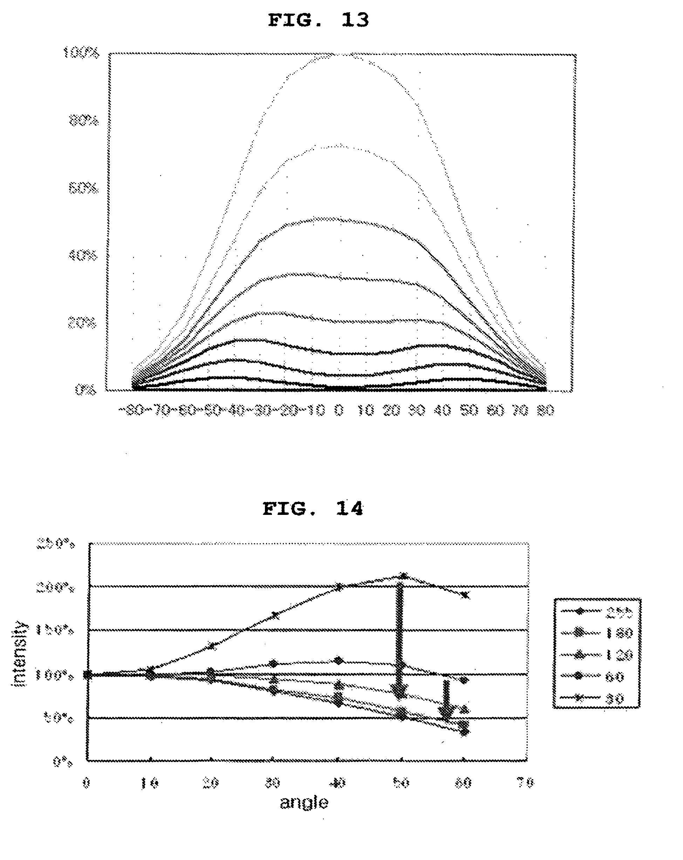

FIGS. 13 and 14 are reference views for explaining black materials;

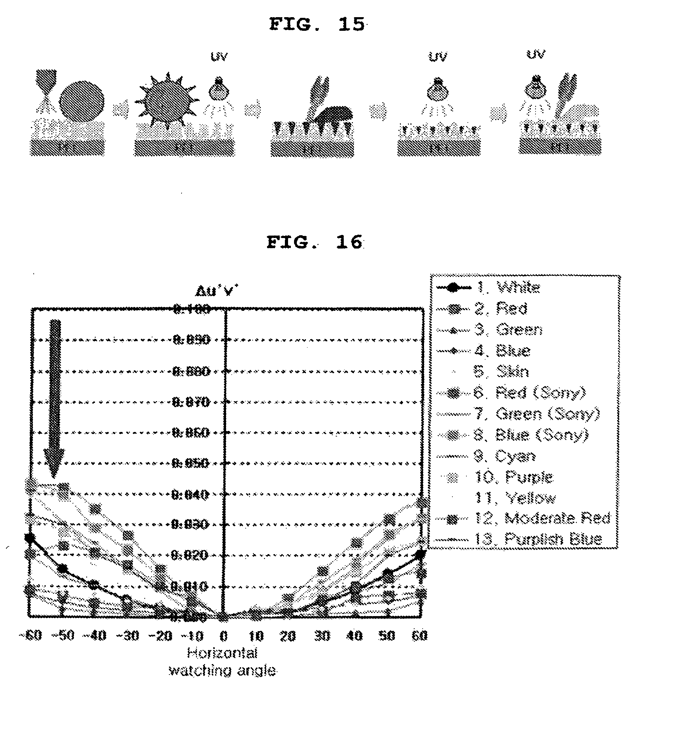

FIG. 15 is a flow diagram showing a process of fabricating the optical filter shown in FIG. 10;

FIG. 16 is a graph showing color shifts in an LCD on which the optical filter shown in FIG. 10 is mounted;

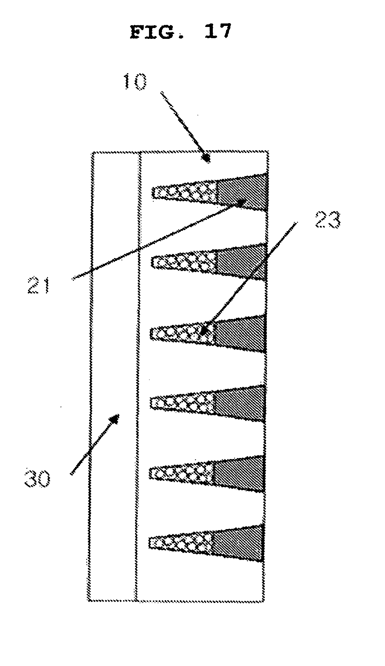

FIG. 17 is a cross-sectional view showing an optical filter according to a second exemplary embodiment of the invention; and

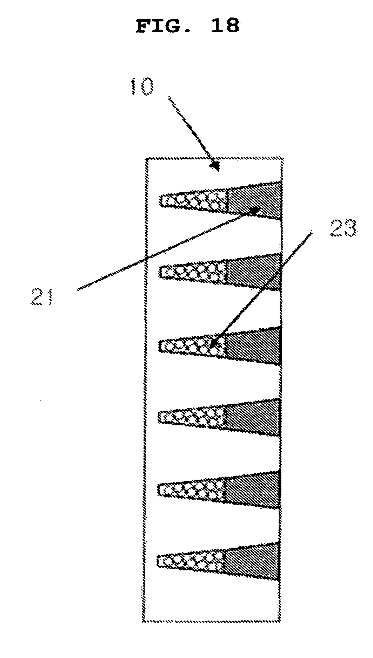

FIG. 18 is a cross-sectional view showing an optical filter according to a third exemplary embodiment of the invention.

### DETAILED DESCRIPTION OF THE INVENTION

Reference will now be made in detail to various embodiments of the present invention(s), examples of which are illustrated in the accompanying drawings and described below. While the invention will be described in conjunction with exemplary embodiments, it will be understood that the present description is not intended to limit the invention to those exemplary embodiments. On the contrary, the invention is intended to cover not only the exemplary embodiments, but also various alternatives, modifications, and other embodiments that may be included within the scope of the invention as defined by the appended claims.

### Comparative Example

FIG. 6 is a perspective view showing an optical filter according to a comparative example not according to the invention.

As shown in the figure, the optical filter of FIG. 6 includes a background layer 10 and a color shift-reducing pattern 20.

The color shift-reducing pattern 20 contains a light-absorbing material. The light-absorbing material includes a green wavelength-absorbing material that absorbs light having green wavelengths in the range from 510nm to 560nm. The light-absorbing material may also include a cyan wavelength-absorbing material that absorbs light having cyan wavelengths in the range from 480nm to 510nm and an orange wavelength-absorbing material that absorbs light having orange wavelengths in the range from 570nm to 600nm. In addition, the light-absorbing material may also include a black material, such as carbon black.

FIGS. 7 and 8 are reference views for explaining light-absorbing materials.

Various optical filters having the color shift-reducing pattern 20 that contain a green wavelength-absorbing material, a cyan wavelength-absorbing material, an orange wavelength-absorbing material, carbon black, or the like, were mounted on an LCD TV, and then color coordinates of a full white screen when viewing it from the front and at a watching angle of 60° were compared.

When the green wavelength-absorbing material is contained in the color shift-reducing pattern 20 having a wedge-shaped cross section, the color of the green wavelength-absorbing material is exhibited stronger according to an increase in the watching angle, so that color coordinates shift toward the pink area in a CIE 1976 UCS color coordinate system u'v'. In addition, when i) the carbon black or ii) the cyan wavelength-absorbing material and the orange wavelength-absorbing material are contained together with the green wavelength-absorbing material, the color coordinates shift toward the purplish pink area in the color coordinate system u'v'.

In the color coordinate system u'v', it is preferred that the value of Δv'/Δu', i.e. (v'₆₀ - v'₀)/(u'₆₀ - u'₀), exists in the range from tan(-15°) to tan(45°). (Here, u'₀, v'₀ are color coordinate values measured at a watching angle of 0°, and u'₆₀ and v'₆₀ are color coordinate values measured at a watching angle of 60°.)

Specifically, when only the green wavelength-absorbing material is contained in the color shift-reducing pattern 20, it is preferred that the slope of the change in color coordinates at a watching angle of 60° with respect to the front in the color coordinate system u'v' exists in the range from tan (15°) to tan (45°). When both the green wavelength-absorbing material and the carbon black are contained, it is preferred that the slope of the change in color coordinates at a watching angle of 60° with respect to the front exists in the range from tan (-15°) to tan (15°). In addition, when the green wavelength-absorbing material, the cyan wavelength-absorbing material, and the orange wavelength-absorbing material are contained, it is preferred that the slope of the change in color coordinates at a watching angle of 60° with respect to the front exists in the range from tan (-15°) to tan (15°).

FIG. 9 is a graph showing color shifts of 13 colors in an LCD TV on which the optical filter shown in FIG. 6 is mounted.

The optical filter of Fig. 9 was fabricated by injecting 0.5 wt% green wavelength-absorbing material (e.g., pink colorant) into the color shift-reducing pattern 20 shown in FIG. 6.

### Embodiments of the Invention

FIG. 10 is a cross-sectional view showing an optical filter according to a first exemplary embodiment of the invention.

The optical filter of this embodiment is provided in front of a display panel of a display device.

The optical filter includes a background layer 10 and a color shift-reducing pattern.

The background layer 10 is in the form of a layer of a light-transparent material. The background layer 10 can be made of an Ultraviolet (UV) curing resin.

The color shift-reducing pattern is formed at the background layer 10 to have a predetermined thickness.

The color shift-reducing pattern can be one selected from among stripes having a wedge-shaped cross section, waves having a wedge-shaped cross section, a matrix having a wedge-shaped cross section, a honeycomb having a wedge-shaped cross section, stripes having a quadrangular cross section, waves having a quadrangular cross section, a matrix having a quadrangular cross section, or a honeycomb having a quadrangular cross section.

In addition, for example, the stripe pattern can be arranged in various ways, such as in horizontal stripes, in vertical stripes, or the like. A horizontal stripe pattern is effective in compensating for watching angles in the vertical direction, whereas a vertical pattern is effective in compensating for watching angles in the horizontal direction.

In addition, it is possible to effectively prevent a moiré phenomenon by arranging the pattern so that it has a predetermined bias angle with respect to the horizontal or vertical direction.

The color shift-reducing pattern can be formed such that the bottom surface thereof is oriented toward a viewer or toward the display panel. In addition, the color shift-reducing pattern can be formed on both surfaces of the background layer 1.

Although FIG. 10 shows the embodiment in which the color shift-reducing pattern is formed as an engraving with respect to the background layer 10, the present invention is not limited thereto. The color shift-reducing pattern can be formed as a embossing with respect to the background layer 10.

The color shift-reducing pattern includes a plurality of partial areas. Here, at least two partial areas have different light absorptivities and/or light diffusivities.

For this, the at least two partial areas can include different light-absorbing materials and/or light-diffusing materials. In a comparative example, it is possible to provide different light absorptivities by injecting different types of light-absorbing materials into first and second partial areas 21 and 23.

In another comparative example, the at least two partial areas can include different amounts of the light-absorbing materials and/or light-diffusing materials. These amounts may include an amount of 0.

Below, a more detailed description will be given. For example, in an embodiment including two partial areas, that is, the first and second partial areas 21 and 23, a variety of modifications can be made, in which i) according to the invention, the first partial area contains the light-absorbing material and the second partial area contains the light-diffusing material, as shown in FIG. 10, ii) in an alternative not according to the invention, the first partial area contains both the light-absorbing material and the light-diffusing material and the second partial area contains one of the light-absorbing material and the light-diffusing material, or iii) in another alternative not according to the invention both the first and second partial areas contain both the light-absorbing material and the light-diffusing material.

Although partial areas can have a variety of arrangements, FIGS. 10, 17, and 18 show exemplary embodiments, in which the first partial area 21 is formed in front of or behind the second partial area 23.

The color shift-reducing pattern can contain i) a green wavelength-absorbing material, ii) a cyan wavelength-absorbing material and an orange wavelength-absorbing material together with a green wavelength-absorbing material, iii) a black material, such as carbon black, together with a green wavelength-absorbing material, a cyan wavelength-absorbing material, and an orange wavelength-absorbing material, iv) a black material, such as carbon black, together with a green wavelength-absorbing material, or v) a black material such as carbon black.

Color shift-reducing pattern containing green wavelength-absorbing material

In the display industry, a display device is typically evaluated by using 13 colors, namely, white, red, blue, green, skin, Sony red, Sony Blue, Sony green, cyan, purple, yellow, moderate red, and purplish blue.

When white light is emitted at a high gray level from a display panel, the luminance of light decreases over the entire wavelength range according to an increase in the watching angle, and particularly decreases most rapidly in the blue wavelength range. However, when light is emitted at a low gray level, the luminance of light increases over the entire wavelength range according to an increase in the watching angle, and particularly increases most rapidly in the green wavelength range.

Therefore, by the injection of the green wavelength-absorbing material into the color shift-reducing pattern, the absorption of light, which is emitted from the display panel, is caused to increase gradually over the entire wavelength range according to an increase in the watching angle, and the absorption of light in the green wavelength range from 510nm to 560nm is caused to increase in a relatively large amount. This serves to reduce the difference in a relative luminance of RGB due to the change in the watching angle and the gray level and thereby minimize the color shift according to increases in the watching angle.

The green wavelength-absorbing material can be one of inorganic and organic materials that can absorb green wavelength light in the range from 510nm to 560nm. It is preferred that pink colorant be used for the green wavelength-absorbing material. In addition to the pink colorant, examples of the green wavelength-absorbing material may include any materials that can absorb green wavelength light.

Color shift-reducing pattern containing green wavelength-absorbing material + cyan wavelength-absorbing material + orange wavelength-absorbing material

FIG. 11 is graphs showing the spectra of light emitted from Light-Emitting Diode (LED) and Cold Cathode Fluorescent Light (CCFL) backlights.

As shown in the figure, unlike the LED backlight (seen in the left part of FIG. 11), the CCFL backlight (seen in the right part of FIG. 11) exhibits strong peaks in the cyan wavelength range in the vicinity of 490nm and in the orange wavelength range in the vicinity of 590nm.

Such peaks in the cyan and orange wavelength ranges contribute to a reduction in the range of color reproduction and cause the color shift to deteriorate.

FIG. 12 is graphs showing color shifts depending on the watching angle for the LED and CCFL backlights.

As shown in the figure, referring to the color shift results of LCDs having the LED backlight (see in the left part of FIG. 12) and the CCFL backlight (seen in the right part of the FIG. 12), it can be appreciated that the result of the LCD having the CCFL backlight is inferior.

Accordingly, it is possible to further reduce the change in the color of the 13 colors according to an increase in the watching angle by ensuring that the peaks of the cyan wavelength range and the orange wavelength range, which would otherwise have a bad effect on color shift depending on the watching angle, are absorbed more according to an increase in the watching angle.

For this function, the color shift-reducing pattern can contain not only the green wavelength-absorbing material, which can absorb light having green wavelengths in the range from 510nm to 560nm, but also the cyan wavelength-absorbing material, which can absorb light having green wavelengths in the range from 480nm to 510nm, and the orange wavelength-absorbing material, which can absorb light having green wavelength in the range from 570nm to 600n.

As a result, when light is emitted from the display panel, the color shift-reducing pattern absorbs the green wavelength range more according to an increase in the watching angle. In addition, the color shift-reducing pattern absorbs more peaks in the cyan wavelength range and in the orange wavelength range, which have a bad effect on the color shift depending on the watching angle, from the LCD spectrum, according to an increase in the watching angle. This makes it possible to minimize the color changes according to an increase in the watching angle and minimize the changes in the color of all the 13 colors, including blue-shade colors and red-shade colors, thereby further increasing the viewing angle.

Color shift-reducing pattern containing black material

It is possible to mitigate the color shift by adding a black material, such as carbon black, into the color shift-reducing pattern.

FIGS. 13 and 14 are reference views showing changes in luminance and normalized luminance depending on the watching angle and gray level in a bare LCD.

In a high gray level, the luminance decreases as the watching angle increases. However, as shown in FIGS. 13 and 14, in a low gray level, the increase in the luminance according to an increase in the watching angle causes the color shift to deteriorate. Therefore, it is possible to mitigate the color shift by ensuring that light emitted from the display panel is absorbed more according to an increase in the watching angle, so that luminance decreases according to an increase in the watching angle irrespective of the gray level.

It is preferred that the amount of carbon black be in the range from 0.05wt% to 0.9wt%.

The background layer 10 or a backing layer 30 can contain a color correction material that changes or controls color balance by reducing or adjusting the amounts of red (R), green (G), and blue (B) colors.

When light is emitted in the front direction through the optical filter for a display device, the color shift-reducing pattern may adversely causes the color of an image of the display to change. Therefore, it may be preferred that the background layer 10 or the backing layer 30 contains a color correction colorant that absorbs wavelength ranges other than the green wavelength range, the orange wavelength range, and the cyan wavelength range. For example, it is possible to correct the color of light emitted in the front direction to be similar to the original color by adding, to the background layer 10 or the backing layer 30, suitable amounts of a green-complementary wavelength-absorbing material such as a red wavelength-absorbing material and a blue wavelength-absorbing material. Since this can be implemented by simply adding the color correction material into the background layer 10 or the backing layer 30 without providing a separate layer or film, it is possible to simplify the structure and fabrication processes of the optical filter.

The color correction material can be added to an adhesion layer in addition to the background layer 10 or the backing layer 30. The color correction material can also be added to other functional films.

Since the light-diffusing material more uniformly diffuses light emitted from the display panel, it promotes color mixing, thereby mitigating color shift.

The light-diffusing material can be made of light-diffusing particles such as light-diffusing beads.

The light-absorbing material and the light-diffusing material are typically mixed into a transparent polymer resin when they are added to the color shift-reducing pattern. It is preferred that the refractive index of the light-diffusing particles be greater than that of the polymer resin. Excellent light-diffusing effect can be obtained when the refractive index is 0.01 or more. It is preferred that the light-diffusing particles be white particles having an average diameter of 0.1µm or more so that they can diffuse light over all wavelengths. However, the present invention is not limited thereto.

The light-diffusing particles can have two or more sizes and refractive indices. It is possible to properly control optical characteristics based on the material, refractive index, size, and particle size distribution of the light-diffusing particles.

The light-diffusing particles can include one or more selected from among Polymethylmethacrylate (PMMA), vinyl chloride, acrylic resins, Polycarbonate (PC) based resins, Polyethylene Terephthalate (PET) based resins, Polyethylene (PE) based resins, Polystyrene (PS) based resins, Polypropylene (PP) based resins, Polyimide (PI) based resins, glass, and oxides such as silica TiO₂,

In addition, as shown in FIG. 10, the optical filter can include the backing layer 30, which supports the background layer 10.

It is preferred that the backing layer 30 be made of a transparent resin film that allows Ultraviolet (UV) rays to pass through. As the material of the backing layer 30, it is possible to use, for example, Polyethylene Terephthalate (PET), Polycarbonate (PC), Polyvinyl Chloride (PVC), or the like.

FIG. 15 is a flow diagram showing a process of fabricating the optical filter shown in FIG. 10.

A method of forming a color shift-reducing pattern includes the steps of applying a UV curing resin over one surface of the backing layer 30, and then engraving grooves on the UV curing resin using a pattern-forming roll. Afterwards, the UV curing resin is exposed to UV rays, thereby finally forming the background layer 10 in which the engraved grooves having a wedge-shaped cross section are formed.

In addition, a mixture including a light-absorbing material, a UV curing polymer resin, a solvent, etc. is injected into the engraved grooves, and then the solvent is vaporized by drying, so that the engraved grooves are filled about halfway. Afterwards, the mixture is cured by exposing it to UV rays.

Afterwards, another mixture including a light-diffusing material, a UV curing polymer resin, etc. is injected into the engraved grooves, followed by UV radiation, thereby completing the color shift-reducing pattern.

However, the present invention is not limited thereto. The engraved grooves of the background layer can be produced by using a variety of methods, such as a hot press method using a thermoplastic resin, an injection molding method in which a thermoplastic resin or a thermosetting resin is injected, and then is molded.

FIG. 16 is a graph showing color shifts in an LCD on which the optical filter shown in FIG. 10 is mounted.

The optical filter was fabricated by adding a green wavelength-absorbing material (pink colorant) of 0.5wt% to the first partial area 21, light-diffusing beads of 1wt% to the second partial area 23, in which the light-diffusing beads has a refractive index of 1.59 (the difference from that of the polymer resin is 0.09) and an average diameter of 6µm. Thereby, the color shift result shown in FIG. 16 was obtained.

When compared with FIGS. 5 and 9, it can be appreciated that the effect of mitigating color shift is improved for all the 13 colors.

FIG. 17 is a cross-sectional view showing an optical filter according to a second exemplary embodiment of the invention, and FIG. 18 is a cross-sectional view showing an optical filter according to a third exemplary embodiment of the invention.

As shown in the figure, the arrangement of the first and second partial areas 21 and 23 can have a variety of modifications, and the backing layer 30 can be excluded in some embodiments.

The optical filter for a display device according to exemplary embodiments of the invention is disposed in front of the display panel, and can be formed by stacking a variety of functional films, such as an antireflection layer, an antiglare layer, an anti-fog layer, or the like, over a transparent substrate, in addition to the background layer and the backing layer.

Although only the LCD has been described, by way of example, as the display device of the invention, for the sake of convenience, the display device of the invention is not limited thereto. The display device of the invention can include a variety of devices, namely, a large size display device, which reproduces RGB colors, such as a Plasma Display Panel (PDP), an Organic Light-Emitting Diode (LED), a Field Emission Display (FED), or the like; a small mobile display device, such as a Personal Digital Assistant (PDA), a display window of a small size game machine, a display window of a mobile phone, or the like; a flexible display device; or the like.

The foregoing descriptions of specific exemplary embodiments of the present invention have been presented for the purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto.

## Claims

1. An optical filter for a display device in which color of a screen of a display panel of the display device shifts as a watching angle at which a viewer watches the screen increases, the optical filter, comprising:
a background layer (10); and
a pattern of grooves formed up to a predetermined thickness in the background layer (10), the grooves being spaced apart from each other in plan-view,
**characterized in that** each groove has a first partial area (21) and a second partial area (23) in cross-sectional view corresponding to respective first and second sub-volumes of each groove,
wherein each groove contains a light-absorbing material and a light-diffusing material,
the light-absorbing material including
a green wavelength-absorbing material that absorbs green wavelengths of light from 510nm to 560nm,
the green wavelength-absorbing material being such that, when only the green wavelength-absorbing material without the light-diffusing material is contained in the grooves, (v'60 - v'0)/(u'60 - u'0) ranges from tan (15°) to tan (45°), where u'0 and v'0 are color coordinate values of the optical filter measured at a watching angle of 0°, and u'60 and v'60 are color coordinate values of the optical filter measured at a watching angle of 60°, and
the light-diffusing material including light-diffusing beads,
wherein among the first and second sub-volumes only the first sub-volume contains the light-absorbing material, and only the second sub-volume contains the light-diffusing material, and
whereby the two sub-volumes of each groove have different light absorptivities and light diffusivities.

2. The optical filter according to claim 1, wherein the first sub-volume is formed in front of or behind the second sub-volume.

3. The optical filter according to claim 1, wherein the light-absorbing material further includes a cyan wavelength-absorbing material that absorbs cyan wavelengths of light from 480nm to 510nm and an orange wavelength-absorbing material that absorbs orange wavelengths of light from 570nm to 600nm.

4. The optical filter according to claim 1, wherein the light-absorbing material further includes a black material.

5. The optical filter according to claim 4, wherein the black material is carbon black.

6. The optical filter according to claim 1, wherein each groove contains a polymer resin.

7. The optical filter according to claim 1, wherein the pattern is one selected from the group consisting of stripes having a wedge-shaped cross section, waves having a wedge-shaped cross section, a matrix having a wedge-shaped cross section, a honeycomb having a wedge-shaped cross section, stripes having a quadrangular cross section, waves having a quadrangular cross section, a matrix having a quadrangular cross section, and a honeycomb having a quadrangular cross section.

8. A display device comprising the optical filter set forth in claim 1.

9. A method of fabricating the optical filter set forth in claim 1, the method comprising the steps of:
preparing the background layer (10) in which the grooves are formed;
injecting the light-absorbing material to be contained in the first sub-volume of each groove together with a solvent into each groove;
vaporizing the solvent; and
injecting the light-diffusing material to be contained in the second sub-volume of each groove into each groove.

## Patentansprüche

1. Ein optischer Filter für eine Anzeigevorrichtung, bei dem sich die Farbe eines Bildschirms einer Anzeigetafel der Anzeigevorrichtung verschiebt, wenn ein Betrachtungswinkel, unter dem ein Betrachter den Bildschirm betrachtet, zunimmt, wobei der optische Filter aufweist:
eine Hintergrundschicht (10); und
ein Muster aus Nuten, das bis zu einer vorbestimmten Dicke in der Hintergrundschicht (10) ausgebildet ist, wobei die Nuten in Aufsicht voneinander beabstandet sind,
**dadurch gekennzeichnet, dass** jede Nut einen ersten Teilbereich (21) und einen zweiten Teilbereich (23), die in einer Querschnittansicht einem jeweiligen ersten und zweiten Teilvolumen jeder Nut entsprechen, aufweist
wobei jede Nut ein lichtabsorbierendes Material und ein lichtstreuendes Material enthält,
wobei das lichtabsorbierende Material aufweist
ein grüne Wellenlängen absorbierendes Material, das grüne Wellenlängen von Licht von 510 nm bis 560 nm absorbiert,
wobei das grüne Wellenlängen absorbierende Material derart ist, dass, wenn nur das grüne Wellenlängen absorbierende Material ohne das lichtstreuende Material in den Nuten enthalten ist, (v'60 - v'0)/(u'60 - u'0) in einem Bereich von tan (15°) bis tan (45°) liegt, wobei u'0 und v'0 Farbkoordinatenwerte des optischen Filters, die in einem Betrachtungswinkel von 0° gemessen werden, sind, und u'60 und v'60 Farbkoordinatenwerte des optischen Filters, die in einem Betrachtungswinkel von 60° gemessen werden, sind, und
wobei das lichtstreuende Material lichtstreuende Kugeln aufweist,
wobei von dem ersten und zweiten Teilvolumen nur das erste Teilvolumen das lichtabsorbierende Material aufweist und nur das zweite Teilvolumen das lichtstreuende Material aufweist, und
wodurch die zwei Teilvolumen jeder Nut verschiedene Lichtabsorptionsfähigkeiten und Lichtstreufähigkeiten aufweisen.

2. Der optische Filter nach Anspruch 1, wobei das erste Teilvolumen vor oder hinter dem zweiten Teilvolumen ausgebildet ist.

3. Der optische Filter nach Anspruch 1, wobei das lichtabsorbierende Material ferner ein cyanfarbene Wellenlängen absorbierendes Material, das cyanfarbene Wellenlängen von Licht von 480 nm bis 510 nm absorbiert, und ein orange Wellenlängen absorbierendes Material, das orange Wellenlängen von Licht von 570 nm bis 600 nm absorbiert, aufweist.

4. Der optische Filter nach Anspruch 1, wobei das lichtabsorbierende Material ferner ein schwarzes Material aufweist.

5. Der optische Filter nach Anspruch 4, wobei das schwarze Material kohlenschwarz ist.

6. Der optische Filter nach Anspruch 1, wobei jede Nut ein Polymerharz enthält.

7. Der optische Filter nach Anspruch 1, wobei das Muster eines ist, das aus der Gruppe bestehend aus Streifen, die einen keilförmigen Querschnitt aufweist, Wellen, die einen keilförmigen Querschnitt aufweisen, einer Matrix, die einen keilförmigen Querschnitt aufweist, einer Wabe, die einen keilförmigen Querschnitt aufweist, Streifen, die einen viereckigen Querschnitt aufweisen, Wellen, die einen viereckigen Querschnitt aufweisen, einer Matrix, die einen viereckigen Querschnitt aufweist, und einer Wabe, die einen viereckigen Querschnitt aufweist, ausgewählt ist.

8. Eine Anzeigevorrichtung, aufweisend den optischen Filter nach Anspruch 1.

9. Ein Verfahren zur Herstellung des optischen Filters nach Anspruch 1, wobei das Verfahren die Schritte aufweist:
Herstellen der Hintergrundschicht (10), in der die Nuten ausgebildet werden;
Injizieren des lichtabsorbierenden Materials, das im ersten Teilvolumen jeder Nut enthalten sein soll, gemeinsam mit einem Lösungsmittel in jede Nut;
Verdampfen des Lösungsmittels; und
Injizieren des lichtstreuenden Materials, das im zweiten Teilvolumen jeder Nut enthalten sein soll, in jede Nut.

## Revendications

1. Filtre optique pour un dispositif d'affichage dans lequel une couleur d'un écran d'un panneau d'affichage du dispositif d'affichage change si un angle de visualisation sous lequel un utilisateur regarde l'écran augmente, le filtre optique comprenant:
une couche de fond (10) ; et
un motif de rainures formé jusqu'à une épaisseur prédéterminée dans la couche de fond (10), les rainures étant espacées les unes des autres, en vue en plan,
**caractérisé en ce que** chaque rainure a une première zone partielle (21) et
une seconde zone partielle (23) qui correspondent à un premier et un second volumes partiels respectifs de chaque rainure, en vue en coupe transversale,
dans lequel chaque rainure contient un matériau absorbant la lumière et un matériau diffusant la lumière,
le matériau absorbant la lumière comprenant
un matériau d'absorption de longueur d'onde verte qui absorbe des longueurs d'onde vertes de lumière allant de 510nm à 560nm,
le matériau d'absorption de longueur d'onde verte étant de telle manière que, si seulement le matériau d'absorption de longueur d'onde verte est contenu dans les rainures sans le matériau diffusant la lumière, (v'60 - v'0)/(u'60 - u'0) soit dans la plage de tan (15°) à (45°), u'0 et v'0 étant des valeurs de coordonnées de couleurs du filtre optique mesurées à un angle de visualisation de 0°, et u'60 et v'60 étant des valeurs de coordonnées de couleurs du filtre optique mesurées à un angle de visualisation de 60°, et
le matériau diffusant la lumière comprenant des perles diffusant la lumière,
parmi le premier et le second volumes partiels, seulement le premier volume partiel contenant le matériau absorbant la lumière, et seulement le second volume partiel contenant le matériau diffusant la lumière, et
les deux volumes partiels de chaque rainure ayant des absorptivités de lumière et des diffusivités de lumière différentes.

2. Filtre optique selon la revendication 1, dans lequel le premier volume partiel est formé devant ou derrière le second volume partiel.

3. Filtre optique selon la revendication 1, dans lequel le matériau absorbant la lumière comprend en outre un matériau d'absorption de longueur d'onde cyane qui absorbe des couleurs d'onde cyanes de lumière allant de 480nm à 510nm et un matériau d'absorption de longueur d'onde orange qui absorbe des longueurs d'onde oranges de lumière allant de 570nm à 600nm.

4. Filtre optique selon la revendication 1, dans lequel le matériau absorbant la lumière comprend en outre un matériau noir.

5. Filtre optique selon la revendication 4, dans lequel le matériau noir est du noir de carbone.

6. Filtre optique selon la revendication 1, dans lequel chaque rainure contient une résine polymère.

7. Filtre optique selon la revendication 1, dans lequel le motif est un motif sélectionné parmi le groupe constitué de bandes ayant une section transversale en forme de coin, d'ondes ayant une section transversale en forme de coin, d'une matrice ayant une section transversale en forme de coin, d'un nid d'abeilles ayant une section transversale en forme de coin, de bandes ayant une section transversale quadrangulaire, d'ondes ayant une section transversale quadrangulaire, d'une matrice ayant une section transversale quadrangulaire, et d'un nid d'abeille ayant une section transversale quadrangulaire.

8. Dispositif d'affichage comprenant le filtre optique selon la revendication 1.

9. Procédé de fabrication du filtre optique selon la revendication 1, le procédé comprenant les étapes suivantes :
préparer la couche de fond (10) dans laquelle sont formées les rainures ;
injecter le matériau absorbant la lumière destiné à être contenu dans le premier volume partiel de chaque rainure dans chaque rainure, conjointement avec un solvant ;
vaporiser le solvant ; et
injecter le matériau diffusant la lumière destiné à être contenu dans le second volume partiel de chaque rainure dans chaque rainure.
